# EUROPÄISCHE PATENTSCHRIFT

(11) **EP 1 963 441 B1**
(45) Veröffentlichungstag und Bekanntmachung des Hinweises auf die Patenterteilung: **29.09.2010**
(21) Anmeldenummer: 06829428.9
(22) Anmeldetag: 08.12.2006
(51) Int. Cl.: C09D 5/00, H04R 1/00, H04R 23/00

(54) **POLYELEKTROLYT MONO- UND MULTISCHICHTEN FÜR OPTISCHE SIGNALWANDLER**
POLYELECTROLYTE MONOLAYERS AND MULTILAYERS FOR OPTICAL SIGNAL TRANSDUCERS
POLYELEKTROLYTES MONOCOUCHES OU MULTICOUCHES POUR DES TRANSDUCTEURS DE SIGNAUX OPTIQUES

(30) Priorität: 21.12.2005 EP 05027985
(43) Veröffentlichungstag der Anmeldung: 03.09.2008
(73) Patentinhaber: Siemens Healthcare Diagnostics GmbH, 65760 Eschborn (DE)
(72) Erfinder: HILDENBRAND, Karlheinz, 47802 Krefeld (DE); SCHWERS, Stephan, 51061 Köln (DE); REIFENBERGER, Elke, 53757 St. Augustin (DE)
(74) Vertreter: Maier, Daniel Oliver
(86) Internationale Anmeldenummer: PCT/EP2006/011827
(87) Internationale Veröffentlichungsnummer: WO 2007/079863

(56) Entgegenhaltungen:
- WO-A-02/068481
- WO-A-2004/096895
- WO-A-2006/087344

## Beschreibung

Die Erfindung betrifft Verfahren zur Beschichtung von dielektrischen Materialien mit kationischen Polyelektrolyt Mono- und Multischichten sowie einen optischen Signalwandler mit einer Beschichtung aus diesen Polyelektrolytschichten und dessen Verwendung.

Ansprüche 1 bis 4 definieren die Verwendung und Ansprüche 5 bis 8 definieren der optische Signalwandler.

Dielektrische Materialien werden mit Polyelektrolyt Mono- bzw. Multischichten zur Bio- und Chemofunktionalisierung modifiziert, mit dem Ziel, chemische und/oder biochemische (bio-)chemische) Erkennungselemente, wie z.B. Rezeptoren, Antikörper, und DNA an deren Oberfläche immobilisieren zu können. Solche beschichtete dielektrische Materialien, z. B. beschichtete optische Wellenleiter, finden Anwendung als Signalwandler (Transducer), wie sie in der Sensorik bei Bio- oder Chemosensoren eingesetzt werden.

Als Bio- oder Chemosensoren bezeichnet man Geräte, die mit Hilfe eines Signalwandlers und einer Erkennungsreaktion einen Analyten qualitativ oder quantitativ nachweisen können. Als Erkennungsreaktion wird ganz allgemein die spezifische Bindung oder Reaktion eines so genannten Analyten mit einem so genannten Erkennungselement bezeichnet. Beispiele für Erkennungsreaktionen sind die Bindung von Liganden an Komplexe, die Komplexierung von Ionen, die Bindung von Liganden an (biologische) Rezeptoren, Membranrezeptoren oder Ionenkanäle, von Antigenen oder Haptenen an Antikörper, von Substraten an Enzyme, von DNA oder RNA an bestimmte Proteine, die Hybridisierung von DNA/RNA/PNA oder die Prozessierung von Substraten durch Enzyme. Analyten können sein: Ionen, Proteine, natürliche oder künstliche Antigene oder Haptene, Hormone, Cytokine, Mono- und Oligosaccharide, Soffwechselprodukte, oder andere biochemische Marker, die in der Diagnostik verwendet werden, Enzymsubstrate, DNA, RNA, PNA, potentielle Wirkstoffe, Medikamente, Zeilen, Viren. Beispiele für Erkennungselemente sind: Komplexbildner für Metalle/Metallionen, Cyclodextrine, Kronenether, Antikörper, Antikörperfragmente, Anticaline¹, Enzyme, DNA, RNA, PNA, DNA/RNA-bindende Proteine, Enzyme, Rezeptoren, Membranrezeptoren, Ionenkanäle, Zelladhäsionsproteine, Ganglioside, Mono- oder Oligosaccharide.

Diese Bio- oder Chemosensoren können in der Umweltanalytik, dem Nahrungsmittelbereich, der Human- und Veterinärdiagnostik und dem Pflanzenschutz eingesetzt werden, um Analyten qualitativ und/oder quantitativ zu bestimmen. Die Spezifität der Erkennungsreaktion ermöglicht es, auch Analyten in komplexen Proben wie z. B. Umgebungsluft, verschmutztem Wasser oder Körperflüssigkeiten ohne oder nur mit geringer vorherige Aufreinigung qualitativ oder quantitativ zu bestimmen. Zusätzlich können Bio- oder Chemosensoren auch in der (bio-) chemischen Forschung und Wirkstoffsuche eingesetzt werden, um die Interaktion zwischen zwei unterschiedlichen Substanzen zu untersuchen (z. B. zwischen Proteinen, DNA, RNA, oder biologisch aktiven Substanzen und Proteinen, DNA, und RNA).

Die Integration der Erkennungsreaktion mit dem Signalwandler zu einem Bio- oder Chemosensor kann geschehen, indem man das Erkennungselement oder den Analyten auf der Oberfläche des Signalwandlers immobilisiert. Durch die Erkennungsreaktion, d. h. das Binden oder die Reaktion des Analyten mit dem Erkennungselement, ändern sich die optischen Eigenschaften des Mediums direkt an der Oberfläche des Signalwandlers (z. B. Änderung des optischen Brechungsindexes, der Absorption, der Fluoreszenz, der Phosphoreszenz, und der Lumineszenz), was vom Signalwandler in ein Messsignal übersetzt wird.

Optische Wellenleiter sind eine Klasse von Signalwandlern, mit denen man die Änderung der optischen Eigenschaften eines Mediums detektieren kann, das an eine wellenleitende Schicht, typischer Weise ein Dielektrikum, grenzt. Wird Licht als geführte Mode in der wellenleitenden Schicht transportiert, fällt das Lichtfeld an der Grenzfläche Medium/Wellenleiter nicht abrupt ab, sondern klingt in dem an den Wellenleiter angrenzenden sogenannten Detektionsmedium exponentiell ab. Dieses exponentiell abfallende Lichtfeld wird als evaneszentes Feld bezeichnet. Werden sehr dünne Wellenleiter verwendet, deren Brechungsindex möglichst stark von dem des angrenzenden Mediums differiert, werden Abfalllängen des evaneszenten Feldes (Intensität fällt auf den Wert 1/e ab) von <200 nm erreicht. Ändern sich die optischen Eigenschaften des an den Wellenleiter grenzenden Mediums (z. B. Änderung des optischen Brechungsindexes^{2,3}, und der Lumineszenz ^{4,5,6}) innerhalb des evaneszenten Feldes, kann dies über einen geeigneten Messaufbau detektiert werden. Entscheidend für die Verwendung von Wellenleitern als Signalwandler in Bio- oder Chemosensoren ist dabei, dass die Änderung der optischen Eigenschaften des Mediums nur sehr nahe an der Oberfläche des Wellenleiters detektiert wird. Wird nämlich das Erkennungselement oder der Analyt an der Grenzfläche des Wellenleiters immobilisiert, kann das Binden an das Erkennungselement oder die Reaktion des Erkennungselementes oberflächensensitiv detektiert werden, wenn sich dabei die optischen Eigenschaften des Detektionsmediums (flüssig, fest, gasförmig) an der Grenzfläche zum Wellenleiter ändern.

Bei der Verwendung von optischen Wellenleitern als Bio- oder Chemosensoren werden an die Grenzfläche Wellenleiter zu Detektionsmedium hohe Anforderungen gestellt:
- Unter den Reaktionsbedingungen der Erkennungsreaktion muss die Grenzfläche Wellenleiter / Detektionsmedium stabil sein.
- Die Erkennungselemente müssen innerhalb der Reichweite des evaneszenten Feldes des Wellenleiters immobilisiert werden.
- Unter den Reaktionsbedingungen der Erkennungsreaktion muss die Immobilisierung der Erkennungselement stabil sein.
- Die Funktionalität der Erkennungselemente muss auch nach der Immobilisierung noch vorhanden sein.
- Damit nur die spezifische Erkennungsreaktion durch den Signalwandler detektiert wird, muss jede Art von unspezifischer Bindung an die Grenzfläche Wellenleiter / Detektionsmedium unterdrückt werden.

An die Oberfläche von Wellenleitern können auf verschiedenste Weise Erkennungselemente immobilisiert werden. Dies kann z. B. durch Physisorption der Erkennungselemente auf die Signalwandleroberfläche geschehen. Clerc und Lukosz⁷ beschreiben die Physisorption von Avidin auf SiO₂-TiO₂ Wellenleiteroberflächen. In einem zweiten Schritt können unter Ausnutzung der hochaffinen Avidin-Biotin Bindung biotinylierten Antikörpern an die so aufgebrachten Avidin Schichten immobilisiert werden. Ein Nachteil dieser Immobilisierungsmethode von Erkennungselementen auf Wellenleiteroberflächen ist die Instabilität der physisorbierten Avidinschicht. Eine Änderung der Reaktionsbedingungen, wie z. B. Temperaturänderungen, pH-Änderungen, Zugabe von Detergenzien etc., kann zu einer Desorption der Avidinschicht und damit auch des Antikörpers führen.

G. Gao beschreibt in Surface & Coating Technology (2005) 244-250 eine "oxygen plasma" Methode, die eine adsorptive Bindung von DNA an Silika Wafer ermöglicht.

Es ist jedoch bekannt, dass durch Plasma Behandlung erzeugte aktivierte Oberflächen keine gute Langzeitbeständigkeit besitzen und deshalb hinsichtlich Reproduzierbarkeit kritisch zu beurteilen sind.

Die Erkennungselemente, auch "capture" Moleküle genannt, können auch kovalent an die Oberfläche eines Wellenleiters gebunden werden. Eine Möglichkeit dazu stellen bifunktionelle Silane dar, die eine kovalente Bindung mit der Wellenleiteroberfläche eingehen⁸. Über eine zweite funktionelle Gruppe in diesem Silan können nun die Erkennungselemente, wie z. B. Proteine oder DNA⁹, kovalent gebunden werden. Diese bifunktionellen Silane sind sehr reaktiv und bei der kovalenten Bindung an die Wellenleiteroberfläche muss unter absolut trockenen Reaktionsbedingungen gearbeitet werden, um eine Hydrolyse des reaktiven Silans zu vermeiden. Die Bindung der Erkennungselemente über diese Silane an die Wellenleiteroberflächen ist bei sauren, neutralen und leicht basischen Bedingungen stabil. Bei pH-Werten über 9 kann aber eine Hydrolyse des Silans eintreten, was zu einer Desorption der Erkennungselemente von der Oberfläche führen kann. Ein weiterer Nachteil dieser Immobilisierungsmethode liegt in der relativ hohen unspezifischen Adsorption von Proteinen wie z. B. Albumin an die so funktionalisierten Wellenleiteroberflächen¹⁰. Die unspezifische Bindung an diese Wellenleiteroberflächen kann reduziert werden, indem nach der Bindung der Erkennungselemente in einem zweiten Schritt Blockierungsagenzien wie z. B. Polyethylenglycole¹¹ an die Oberfläche gebunden werden.

Alternativ wird die Bindung von hydrophilen Polymeren, wie z. B. Polyacrylamide, Dextrane, Polyethylenglycole etc. an zuvor silanisierte Wellenleiteroberflächen beschrieben¹². Diese Polymere haben die Aufgabe, die unspezifische Bindung von Proteinen etc. an die Oberfläche zu minimieren. Die Erkennungselemente werden dann in einem weiteren Schritt an diese Polymere kovalent gebunden. Problematisch bei dieser Oberflächenfunktionalisierung ist, dass mehrere Schritte zur Immobilisierung der Erkennungselemente an der Oberfläche durchgeführt werden müssen und die Instabilität der Silanbindung an die Wellenleiteroberflächen bei pH >9.

Die Erkennungselemente können auch an Polymere gebunden werden, die ohne vorangegangene Silanisierung direkt auf die Wellenleiterschichten aufgebracht werden.

Polymere als Interface zwischen Wellenleiteroberfläche und Erkennungselement ist Inhalt der vorliegenden Beschreibung.

Unter Berücksichtigung der o.g. Anforderungen an die Grenzfläche Wellenleiter/Detektionsmedium muss das Polymer-Interface unter den Reaktionsbedingungen sowohl zum Substrat als auch zum Erkennungselement eine irreversible Bindung ermöglichen und es muss, wegen der mit 1/e abfallenden Intensität möglichst dünn sein.

Von Vorteil wären deshalb Polymer-Monoschichten, die darüber hinaus, nach dem Ankoppeln der punktuell angeordneten Erkennungselemente, eine Blockierung gegen nichtspezifische Adsorption von Störkomponenten in einem möglichst einfachen Verfahrensschritt ermöglichen.

Da die Oberflächen von Wellenleiterschichten, bzgw. generell von Substraten je nach Anwendungsgebiet verschieden und in der Regel bzgl. Oberflächenchemie nicht exakt bekannt sind, ist die Bereitstellung von geeigneten Polymeren eine große Herausforderung zur Herstellung leistungsfähiger Bio- oder Chemosensoren.

Es hat deshalb nicht an Versuchen gefehlt, durch Synthese maßgeschneiderte Polymere für bestimmte Substratoberflächen herzustellen.

In WO 2006/087344 (Artikel 54 (3) (4) EPÜ) werden wässrige Dispersionen von überwiegend anionischen Polymerelektrolyten und deren Verwendung für wässrige Systeme, als Entwässerungs-, Flockungs- und Retentionsmittel sowie als Naß- und Trockenfestigkeitsmittel bei der Herstellung von Papier, als Entwässerungsmittel für Schlämme, als Zusatz zu Wasch- und Reinigungsmitteln, als Beschichtungsmittel, in Färbeflotten für die Textilfärbung, als Bindemittel für Faservliese und in Ausrüstungsflotten beschrieben. Eine Verwendung bei optischen Signalwandlern wird nicht beschrieben.

Hinsichtlich Beschichtung von Substraten mit Metalloxid Oberflächen, wie TiO₂, Nb₂O₅ oder Ta₂O₅ sind bspw. auch ionische Polymere beschrieben.

In WO 03/020966 sind Poly(L-Lysin)-g-poly(ethylenglykol) Pfropfcopolymere (PLL-g-PEG) beschrieben. Dabei bezeichnet "g" das Pfropfverhältnis (grafting ratio), d. h. den Quotienten aus der Anzahl der Lysineinheiten und der Anzahl Polyethylenglykol Setenketten. Dabei hat sich gezeigt, dass mit diesen PLL-g-PEG Pfropf-Copolymeren nur dann gute Ergebnisse erzielt werden können, wenn das Pfropfverhältnis "g" innerhalb der Bandbreite 8 bis 12 liegt und die PEG Seitenketten im Molekulargewichtsbereich von 1500 bis 5000 g/mol liegen.

Dieses komplexe und eng definierte Spezialpolymer erfüllt die gestellten Forderungen bzgl. guter Verfügbarkeit, gleich bleibender Qualität und universelle Anwendbarkeit für unterschiedliche Substratoberflächen nur unzureichend.

Ein weiterer Nachteil dieser Methode stellt die Instabilität dieser Schichten gegenüber pH-Werten von kleiner 3 und größer 9, sowie gegenüber hohen Salzkonzentrationen dar, da unter diesen Bedingungen das elektrostatisch gebundene Polymer von der Oberfläche desorbiert.

In WO 02/068481 sind phosphorhaltige Polymere zur Beschichtung von dielektrischen Materialien und dessen Verwendung bei optischen Signalwandlern beschrieben. Es handelt sich hierbei um wasserlösliche Polymere, die bspw. durch Umsetzen von Polyallylaminhydrochlorid mit Formaldehyd und phosphoriger Säure, nach der sog. Mannich Mödritzer Reaktion, hergestellt werden.

Diese Polyphosphonamide besitzen neben kationischen auch anionische Gruppen, die einer Ankopplung von Erkennungsmolekülen, bspw. DNA auf elektrostatischem Wege, eher kontraproduktiv sind. Darüber hinaus handelt es sich erfahrungsgemäß bei der o.g. Mannich Mödritzer Umsetzung um ein Verfahren, das wegen Nebenreaktionen neben den gewünschten Polyphosphonamiden auch andere Produkte bildet.

Auf Polyelektrolytbindung basierende Gen Chip Konzepte sind dagegen wegen ihrer einfachen Herstellweise, besonders bevorzugte Ausführungsformen bei der Beschichtung von Bio- und Chemorezeptoren.

B. Laguitton beschreibt in US 6 689 478 die Ankopplung von DNA Erkennungsmolekülen an Polyelektrolyt (PEL)-Multischichten, wobei die oberste Bindungsschicht ein kationisches Polymer (kationischer PEL) ist. Polyelektrolyte sind Polymere, die ionische oder ionisierbare Gruppen in ihrer wiederkehrenden Einheit tragen. Beispiele für kationische Polyelektrolyte sind Polyamine, wie Polyethylenimin (PEI) oder Polyammoniumverbindungen, wie Polyallylaminhydrochlorid oder Polydiallyldimethylammoniumchlorid (P DADMAC). Beispiele für anionische Polymere sind die Salze von Polyacrylsäuren (PAS), Polystyrolsulfonsäuren oder Dextransulfonsäure. Polyelektrolyt-Multischichten bestehen aus einem abwechselnden Aufbau von entgegengesetzt geladenen Polyelektrolyten, wie bspw. in "Multilayer Thin Films" G. Decher, Wiley-VCH, 2003 beschrieben. Während die Bindung von Nukleinsäuren an PEL Multischichten ebenfalls zum Stand der Technik gehört (B. Sukhoukov, "Multilayer Films Containing Immobilized Nucleic Acids" Biosensors & Bioelectronics, vol 11, no 9, 913-922, 1966), besteht die Herausforderung, wie in US 6 689 478 beschrieben darin, die erste Polymerschicht, ein kationisches Polymer an das Substrat aus Glas zu binden. Diese Herausforderung wird dadurch gelöst, dass die Glasträger zunächst in einer komplexen Art mit Wasserstoffperoxid und anschließend mit Schwefelsäure behandelt werden, wobei die Glasoberfläche anionisch modifiziert wird. Dagegen argumentiert B. Languitton in US 6 689 478, dass mit Monolayer Polymerschichten, die Anforderungen hinsichtlich zuverlässiger Substratbeschichtung nicht erreicht werden können.

Es wurde nun überraschender Weise gefunden, dass die Polymermodifizierung von Substratoberflächen in Polymermonoschichten dennoch möglich ist, wenn die zuvor erwähnten, leicht und in hoher Qualität verfügbaren kationischen Polyelektrolyt Polymeren ein besonders hohes Molekulargewicht haben.

Ausgehend von einem Wellenleiter mit einer hochbrechenden Ta₂O₅ Oberfläche wurde zunächst in einem screening Verfahren mit verschiedenen kationischen und anionischen Polyelektrolyten gefunden, dass diese Oberfläche keinerlei Affinität zu anionischen Polyelektrolyten zeigte.

Innerhalb der Gruppe der kationischen Polyelektrolyte, das sind Polymere, die in ihrer wiederkehrenden Einheit Ammoniumstrukturen tragen, wurde bspw. gefunden, dass Polyvinylamine mit dem Molekulargewicht (MW) von 50 000 g/mol keine ausreichende Affinität zur Ta₂O₅ Oberfläche zeigten, während Polyvinylamine mit dem MW 340 000 g/mol alle Voraussetzungen erfüllten.

Bei Polyvinylaminen handelt es sich um Polymerisate die durch saure oder alkalische Hydrolyse von Poly(N-vinylformamiden), wie in J. Appl. Pol. Sei Vol 86, 3412-3419 (2002) beschrieben, hergestellt werden. Die entsprechenden Produkte werden von der BASF AG unter dem Handelsnamen "Lupamin" in verschiedenen Molekulargewichten hergestellt. Diese Produkte werden im großen Massstab bspw. als Papierchemikalien, im personal care Bereich, als Superabsorber oder Dispergiermittel eingesetzt. In den Lupamin Verkaufsprodukten sind die aus der Hydrolyse entstehenden Salze noch enthalten. Für den beschriebenen Anwendungsbereich, die Modifizierung von Wellenleiter Oberflächen, kann sowohl die salzhaltige, als auch die entsalzte Form eingesetzt werden. Die Entsalzung kann bspw. durch Ultrafiltration erfolgen.

Analoges wurde mit linearen Polyethyleniminen (1PEI) gefunden. Während 1PEI mit MW 25 000 g/mol (Fa. Polyscience Inc.) die Anforderungen nicht erfüllten, konnte mit den sehr hochmolekularen 1PEI 500 000 g/mol wieder alle Anforderungen erfüllt werden. Polyamine mit ungeladenem N in ihrer wiederkehrenden Einheit zählen in wässeriger Lösung ebenfalls zu den kationischen Polyelektrolyten, da sie unter diesen Bedingungen zu mindest teilweise protoniert sind.

Als weiterer kationischer Polyelektrolyt mit hohem Molekulargewicht kommt Poly-(diallyl-dimethylammoniumchlorid) in Frage, das als wässerige Lösung im Molekulargewichtsbereich von MW 400 000 - 500 000 g/mol gut erhältlich ist. Im Gegensatz zu den vorher erwähnten kationischen Polyelektrolyten handelt es sich hier um quartäre Ammoniumgruppen, d. h. der Ladungszustand ist unabhängig vom pH Wert.

Im Folgenden soll am Bsp. Lupamin 9095 (Polyvinylamin PVAm 340 000 g/mol) das erfindungsgemäße Verfahren zur Herstellung eines Planaren Wellenleiters (PWG: planar wave guide) mit DNA als Erkennungsmolekül (capture DNA) beschrieben werden.

### 1. Beladen des Substrates mit Lupamin 9095

Das Substrat (PWG aus Quarzglas mit Ta₂O₅ Oberfläche) wird 30 Min. in eine stark verdünnte Lupamin 9095 Lösung (0.005 % ig in Wasser) und anschließend 30 Min. in Wasser getaucht und getrocknet.

### 2. Aufbringen der capture DNA spots

Mit Hilfe einer Mikropipette wird auf die mit Polymer beschichtete Ta₂O₅ Seite eine mit Farbstoff markierte DNA Lösung (ca. 10⁻¹⁰m) aufpipettiert und 20 Min. bei RT inkubiert (stehen gelassen).

### 3. Blockieren der nicht bespotteten Oberfläche

Der mit dem capture DNA spot versehene PWG wird 30 Min. in eine wässerige Dextransulfat (DexS) Lösung (MW: 500 000 g/mol, 0.05%ig in Wasser) getaucht und kurz mit Wasser gewaschen.

Der so mit capture DNA spots versehene PWG kann direkt für Hybridisierungeversuche eingesetzt werden.

Bei der hier beschriebenen Methode handelt es sich um einen Prozess, der an Einfachheit und Reproduzierbarkeit kaum zu überbieten ist.

Neben der guten Verfügbarkeit der Polymeren sind v. a. die Anzahl und die Simplizität der einzelnen Prozessschritte zu erwähnen.

So sind bspw. bei Laguitton in US 6689478, wo capture DNA an Polyelektrolyt Multischichten (abwechselnde Folge von kationischen und anionischen Polyelektrolytmonoschichten) gebunden werden, folgende, teilweise recht komplexen Einzelschritte enthalten:
Funktionalisierung der Substratoberfläche mit H₂O₂ und Schwefelsäure, mehrfacher Auftrag von verschiedenen Polyelektrolyten, Aufpipettieren der capture DNA, Abwaschen des capture DNA Überschusses, Blockieren der nicht bespotteten Oberfläche mit einem bifunktionellen Reagenz und Abwaschen des Reagenzüberschusses.

In diesem Zusammenhang soll insbesondere auf den Schritt 3. (Blockieren) des erfindungsgemäßen Verfahrens hingewiesen werden.

Beim Eintauchen des PWG mit dem/den capture DNA spot(s) in die Dextransulfat Lösung erfolgt simultan eine Abwaschung des capture DNA Überschusses und durch die Polyelektrolyt Bindung von Dextransulfat an die nicht bespottete Lupaminoberfläche eine Blockierung hinsichtlich nicht spezifischer Adsorption von DNA. Dextransulfat als Blockierungsmittel bei DNA Chips ist auch insofern von Vorteil als bei der anschließenden Erkennungsreaktion (Hybridisierung) häufig ebenfalls Dextransulfat als Hilfsmittel im entsprechenden Hybridisierungspuffer eingesetzt wird.

Wenn auch die bisher genannten Polymeren, Lupamin 9095 und Dextransulfat bevorzugt eingesetzt werden, ist es prinzipiell möglich alternative Polyelektrolyt Kombinationen einzusetzen.

Bzgl. kationische Polyelektrolyte, die in hoher Affinität an die Substratoberfläche binden und eine ionische oder kovalente Anknüpfung der capture DNA ermöglichen, kommen bspw. alle bekannten kationischen Polyelektrolyte in Frage, sofern sie ein sehr hohes Molekulargewicht, vzgw. höher als 100 000, besonders bevorzugt höher als 250 000 g/mol haben. Beispiele sind, Polyallylamin, Polydimethyldiallylammoniumchlorid, Polyvinylpyridin, kationisch modifizierte Polyacrylate und Polyethylenimin (PEI), das sowohl verzweigt als auch linear, je nach Herstellweise vorliegen kann. Lineares, sehr hochmolekulares PEI kann leicht aus dem gut verfügbaren Poly(2-ethyl-2-oxazolin) (MW: 500 000 g/mol) durch saure Hydrolyse hergestellt werden.

Die genannten kationischen Polyelektrolyte können sowohl als Hydrochlorid als auch in ihrer aminischen Form eingesetzt werden. Die aminische Form ist nämlich in wässeriger Lösung teilweise protoniert und besitzt daher in dieser Form ebenfalls kationische Ladungseigenschaften.

Bzgl. anionischer Polyelektrolyte, die durch Wechselwirkung mit der kationischen Oberfläche zur anionischen Blockierung gegen nicht spezifische DNA eingesetzt werden, kommen neben Dextransulfat alle bekannten anionischen Polyelektrolyte, bspw. die Na Salze von Polystyrolsulfonsäure, Polyacrylsäure, bzw. Polyacrylsärecopolymere oder Polymaleinsäure und deren Copolymere in Frage.

Während bei den oben erwähnten kationische Polyelektrolyten für das erfindungsgemäße Verfahren, wie oben erwähnt, ein sehr hohes Molekulargewicht erforderlich ist, können die anionischen Polyelektrolyte auch in ihrer niedermolekularen Form eingesetzt werden.

Bspw. wurden mit Dextransulfat sowohl mit MW 5000 als auch 500 000 g/mol hervorragende Blockierungseigenschaften gegen nichtspezifische DNA Adsorption erzielen.

Wenn auch bei dem erfindungsgemäßen Verfahren die auf Physisorption (Polyelektrolyt Wechselwirkung) basierenden Testelemente hinsichtlich DNA Chips bevorzugt sind, können die mit kationischen Polyelektrolyten modifizierten Substraten in ihrer aminischen Form auch über kovalente Bindungsmechanismen modifiziert werden. So ist bekannt, dass an aminische Oberflächen Biomoleküle über bifunktionelle Reagenzien, wie Glutardialdehyd oder Bis N-Hydroxysuccinimide, bspw. Disuccinimdylsuberat (DSS) oder Sulfo-DSS angekoppelt werden können.

In analoger Weise kann auch der Blockierungsschritt über kovalente Bindungsmechanismen erfolgen. Bspw. können hinsichtlich nichtspezifische Proteinadsorption über bifunktionelle Reagenzien Polyethylenglykole, Amin modifizierte Polyethylenglykole oder hochverzweigte Polyglycerine (hyperbrached polyglycerol (Fa. Hyperpolymers GmbH) angekoppelt werden. Polyethylenglykole können bspw. auch über Isocyanat- funktionalisierte Polyethylenglykole bspw. Polyethylenglykolmonomethylether oder Succinimidyester derivatisierte Polyethylenglykole (Shearwater Polymers) angekoppelt werden.

Das beschriebene, besonders bevorzugte Verfahren, basierend auf hochmolekularen kationischen Polyelktrolyten als Polymer Interface und anionische Polyelektrolyten als Blockierungsschicht gegen nicht spezifische DNA Adsorption, bezieht sich auf Substrate mit Metalloxid-, vzgw. Ta₂O₅ Oberflächen.

Bei anderen Substratoberflächen, die bspw. partiell positiv geladen sind, können sich dementsprechend diese Verhältnisse umkehren, so dass anionische hochmolekulare Polyelektrolyte als Polymer Interface dienen können.

Die hochmolekularen kationischen Polyelektrolyte eignen sich bevorzugt für die Verankerung des Polymers auf Wellenleitern aus Materialien wie TiO₂, Ta₂O₅, ZrO₂, HfO₂, Al₂O₃, SiO₂ (Si(Ti)O₂), In₂O₃/SnO₂ (ITO), Aluminumsilicate, Nb₂O₅, Vanadiumoxide, oder Mischungen dieser Materialien. Die Wellenleitermaterialien können aber auch Oxide oder Hydroxide folgender Elemente sein, die Oxide oder Hydroxide bilden können: Sc, Y, Ti, Zr, Hf, V, Nb, Ta, Cr, Mo, W, Mn, Tc, Re, Fe, Ru, Os, Co, Rh, Ir, Ni, PD, Pt, Cu, Ag, Au, Zn, Cd, Hg, B, Al, Ga, In, Tl, Ge, Sn, Pb, As, Sb, Bi, Lanthanide, Actinide und Mixturen davon ebenso wie Mixturen von Gruppe IIa (Be, Mg, Ca, Sr, Ba, Ra) und VIb (Se, Te, Po)).

Das Polymer wird aus organischer oder bevorzugt wässriger Lösung auf die Wellenleiteroberflächen aufgebracht. Dies kann durch Inkubation in der Lösung, wie Tauchen, Sprühen, Spotten, Spincoating oder ähnliche übliche Verfahren geschehen. Typischerweise werden Lösungen zwischen 0,1 bis 0.0001 Gew.%, insbesondere zwischen 0,05 und 0.001 Gew.%, verwendet und die Wellenleiteroberflächen bei Temperaturen zwischen 0 und 200°C, insbesondere zwischen 20 und 30°C, beschichtet. Die Inkubationszeit der Wellenleitermaterialien mit den Polymer-Lösungen kann zwischen 10 s und 48 h liegen, typischerweise zwischen 10 min und 24 h. Nach der Inkubation werden die Wellenleiter mit organischen Lösungsmitteln oder wässrigen Lösungen gespült und gegebenenfalls weiter derivatisiert.

Polyelektrolyte zur Bio- und Chemofunktionalisierung chemisorbieren aus organischer oder wässriger Lösung auf Wellenleiteroberflächen. Sie bilden aufgrund der spezifischen Polyelektrolyt Bindung an Wellenleitermaterialien eine stabile Schicht auf dem Wellenleiter aus. Die Bindung ist über einen weiten pH-Bereich (ph = 1 bis pH = 14), Temperaturbereich (0 °C bis 100 °C) wie auch gegenüber hohen Salzkonzentrationen (1M) stabil. Auch die Anwesenheit von Detergenzien in der Reaktionslösung führt nicht zu einer Desorption des Polymers von der Wellenleiteroberfläche. Da nach einer Polyelektrolytbelegung der Substratoberfläche mit einer monomolekularen Schicht eine weitere Adsorption von gleichsinnig geladenen Polymeren verhindert wird, kann ganz im Sinne einer Chemisorption nur eine Monolage an Polymer auf der Oberfläche aufgebracht werden. Damit kann sichergestellt werden, dass die Erkennungselemente innerhalb des evaneszenten Lichtfeldes und somit im sensitiven Detektionsbereich des Signalwandlers immobilisiert werden.

Die auf die beschriebene Weise beschichteten Wellenleiterchips können für jede Art von qualitativer, semi-quantitativer oder quantitative analytische Assays verwendet werden.

Erkennungselemente können direkt oder mit Hilfe eines Crosslinkers kovalent, koordinativ oder über eine andere Bindung an die funktionellen Gruppen des Polymers und somit an die Oberfläche des Bio- oder Chemosensors immobilisiert werden. Die direkte Kopplung der Erkenungselemente kann vor der Beschichtung der Wellenleiter mit dem Polymer erfolgen oder danach. Die Erkennungselemente können über eigene funktionelle Gruppen wie Carbonsäure, Carbonsäureester, Carbonsäurechlorid, Carbonsäureanhydrid, Carbonsäurenitrophenylester, CarbonsäureN-hydroxysucinimid, Carbonsäureimidazolid, Carbonsäure-pentafluorophenylester, Hydroxy, Toluolsulfonyl, Trifluoromethylsulfonyl, Epoxy, Aldehyd, Keton, β-Diearbonyl, Isocyanat, Thioisocyanat, Nitril, Amin, Aziridin, Hydrazin, Hydrazid, Nitro, Thiol, Disulfid, Thiosulfit, Halogen, Jodacetamid, Bromacetamid, Chloracetamid, Borsäureester, Maleimid, α,β-ungesättigte Carbonyle, Phosphat, Phosphonat, Hydroxymethylamid, Alkoxymethylamid, Benzophenon, Azid, Triazen, Acylphosphan, an die funktionellen Gruppen des Polymers kovalent gebunden werden. Die Kombination welche funktionelle Gruppe des Erkennungselementes mit welcher funktionellen Gruppe des Polymers reagiert ergibt sich aus den dem Chemiker bekannten Reaktionsmöglichkeiten zwischen den funktionellen Gruppen.

Proteine als Erkennungselemente können z. B. über ihre Aminosäureseitenketten an dem Polymer immobilisiert werden. Speziell Aminosäuren wie z. B. Lysine, Cysteine, Serine, Tyrosine, Histidine, Glutamate, Aspartate, die an der Oberfläche eines Proteins lokalisiert sind besitzen funktionelle Gruppen in ihren Seitenketten, die eine kovalente Bindung mit den funktionellen Gruppen des Polymers eingehen können. Funktionelle Gruppen können auch in den Erkennungselemente auch durch Derivatisierung (Phosphorylierung von Tyrosinen), Oxidation (z. B. Oxidation von Dioleinheiten glycosilierter Proteine zu Aldehydgruppen), Reduktion (z. B. von Disulfidbrücken zu Thiolen) oder Kopplung eines Crosslinkers erzeugt werden.

Neben der kovalenten Immobilisierung der Erkennungselemente an das Polymer können die Erkennungselemente auch koordinativ an das Polymer gebunden werden. Mit Methoden der Molekularbiologie können z. B. Proteine wie Enzyme, Antikörperfragmente und Rezeptoren mit speziellen Affinitätssequenzen wie z. B. dem 6xHistidin-Tag¹³ hergestellt werden. Diese Affinitätssequenzen besitzen eine hohe Affinität und Spezifität zu Metallionenkomplexen wie z. B. Nickel Nitrilotriessigsäure oder Kupfer Iminodiessigsäure, die als funktionelle Gruppe F in das Polymer eingebracht sein kann.

Alternativ können auch biochemische Erkennungsreaktionen genutzt werden, um Erkennungselemente an das Polymer zu immobilisieren. Die sehr spezifische und hochaffine Bindung von Biotin an Streptavidin¹⁴ kann zur Immobilisierung von Erkennungselementen an das Polymer genutzt werden. Dazu muss zunächst das Streptavidin immobilisiert werden. Das Erkennungselement wird dann mit Biotin funktionalisiert und kann über die Streptavidin-Biotin Wechselwirkung indirekt an das Polymer gebunden werden. Alternativ kann das Erkennungselement molekularbiologisch oder chemisch mit einer kurzen Aminosäuresequenz versehen werden, dem sogenannten StrepTag²⁴, der ebenfalls eine hohe Spezifität und Affinität für Streptavidin aufweist. Die erfindungsgemäßen Signalwandler, dadurch charakterisiert, dass die Erkennungselemente an Polyelektrolyt Monoschichten gebunden sind, sind zwar bevorzugter Inhalt der vorliegenden Anmeldung. Trotzdem kann es bisweilen von Vorteil sein, wenn die Erkennungselemente an Polyelektrolyt Multischichten gebunden sind. Ein Multischichtaufbau induziert zwar einen größeren Abstand des Erkennungselementes von der Wellenleiteroberfläche - und damit eine reduzierte Empfindlichkeit - auf der anderen Seite können im Mehrschichtverfahren Fehlstellen über sog. "bridge Effekte" ausgeglichen werden.

Wesentlich für die erfindungsgemäße Substratbeschichtung ist jedoch, dass der für die erste Substratbeschichtung eingesetzte Polyelektrolyt ein sehr hohes Molekulargewicht, vzgw. größer 100 000, besonders bevorzugt größer 250 000 g/mol aufweist. Für die folgenden Schichten können auch Polyelektrolyte mit niedrigerem Molekulargewicht eingesetzt werden.

Eine Ausführungsform der erfindungsgemässen Immobilisierungsoberflächen ist die Verwendung auf optisch transparenten Träge, die dadurch gekennzeichnet sind, dass sie durchgehende oder einzelne wellenleitende Bereiche umfassen (optische Wellenleiter). Besonders bevorzugt handelt es sich bei dem optischen Wellenleiter um einen optischen Schichtwellenleiter mit einer, der Immobilisierungsoberfläche zugewandten, ersten im wesentlichen optisch transparenten Schicht (a) auf einer zweiten im wesentlichen transparenten Schicht (b) mit niedrigeren Brechungsindex als Schicht (a). Außerdem wird bevorzugt, dass besagter optischer Wellenleiter im wesentlichen planer ist.

Kennzeichen einer derartigen Ausführungsform einer erfindungsgemäßen Immobilisierungsoberfläche auf einem optischen Schichtwellenleiter als Träger ist, dass zur Einkopplung von Anregungswellenlicht in die optisch transparenten Schicht (a), diese Schicht in optischen Kontakt zu einem oder mehrerer optischen Einkoppelelementen aus der Gruppe steht, die von Prismenkopplern, evaneszenten Feldern, Stirnflächenkopplern mit vor einer Stirnseite der wellenleitenden Schicht angeordneten fokussierten Linsen und Gitterkopplern gebildet wird.

Dabei wird bevorzugt, dass die Einkopplung von Anregungslicht in die optisch transparente Schicht (a) mithilfe einer oder mehrerer Gittestrukturen (c) erfolgt, die in der optisch transparenten Schicht (a) ausgebildet sind.

Ein Gegenstand der Erfindung ist eine Oberfläche zur Immobilisierung einer oder mehrerer erster Nukleinsäuren als Erkennungselemente zur Herstellung einer Erkennungsoberfläche zum Nachweis einer oder mehrere zweiter Nukleinsäuren in einer oder mehrerer mit der Erkennungsoberfläche in Kontakt gebrachter Proben, wobei die ersten Nukleinsäuren auf einer kationischen hochmolekularen Polyelektrolyte Schicht als Oberfläche zur Immobilisierung aufgebracht sind.

Besonders bevorzugt werden solche Ausführungsformen einer erfindungsgemäßen Immobilisierungsoberfläche, bei denen die darauf immobilisierten Nukleinsäuren als Erkennungselemente in diskreten (räumlich getrennten) Messbereichen angeordnet sind. In einer zweidimensionalen Anordnung können bis zu 2 000 000 Messbereiche angeordnet sein, und ein einzelner Messbereich ` kann eine Fläche von 10⁻⁵ mm² bis 10 mm² einnehmen. Es wird bevorzugt, dass die Messbereiche in einer Dichte von mehr als 100, bevorzugt mehr als 1000 Messbereiche pro Quadratzentimeter angeordnet sind.

Die diskreten (räumlich getrennten) Messbereiche auf besagter Immobilisierungsoberfläche können durch räumlich selektive Aufbringung von Nukleinsäuren als Erkennungselemente erzeugt werden, vorzugsweise unter Verwendung eines oder mehrerer Verfahren aus der Gruppe von Verfahren, die von "ink jet Spotting", mechanischem Spotting mittels Stift, Feder oder Kapillare, "Micro contact spotting", fluidischer Kontaktierung des Messbereichs mit den biologischen oder biochemischen oder synthetischen Erkennungselementen durch deren Zufuhr in parallelen oder gekreuzten Mikrokanälen, unter Einwirkung von Druckunterschieden oder elektrischen oder elektromagnetischen Potentialen sowie photochemischen oder photolitographischen Immobilisierungsverfahren gebildet wird.

Weiterer Gegenstand der Erfindung ist ein Verfahren zum gleichzeitigen oder sequentiellen, qualitativen und/oder quantitativen Nachweis einer oder mehrerer zweiter Nukleinsäuren in einer oder mehrerer Proben, dadurch gekennzeichnet, dass besagte Proben und gegebenenfalls weitere Reagenzien mit einer der erfindungsgemäßen Immobilisierungsoberflächen nach einer der genannten Ausführungsformen in Kontakt gebracht werden, auf welcher eine oder mehrere Nukleinsäuren als Erkennungselemente zur spezifischen Bindung / Hybridisierung mit zweiten Nukleinsäuren gebunden sind und aus der Bindung /Hybridisierung dieser zweiten Nukleinsäure oder weiter zum Analytnachweis eingesetzter Nachweissubstanzen resultierende Änderung von optischen oder elektrischen Signalen gemessen werden.

Dabei wird bevorzugt, dass der Nachweis einer oder mehrerer zweiter Nukleinsäuren auf der Bestimmung der Änderung einer oder mehrerer Lumineszenzen beruht. Zur Luminszenzerzeugung sind verschiedene optische Anregungskonfigurationen möglich. Eine Möglichkeit besteht darin, dass Anregungslicht zur Anregung einer oder mehrerer Lumineszenzen von einer oder mehrerer Lichtquellen in einer Auflichtanregungsanordnung eingestrahlt wird.

Eine andere mögliche Konfiguration ist dadurch gekennzeichnet, dass Anregungslicht zur Anregung einer oder mehrerer Luminszenzen von einer oder mehrerer Lichtquellen in einer Transmissionslichtanregungsanordung eingestrahlt wird.

Bevorzugt wird eine solche Ausführungsform der erfindungsgemäßen Immobilisierungsoberflächen und/oder Verfahren welche dadurch gekennzeichnet sind, dass die Oberfläche auf einem optischen Wellenleiter angeordnet ist, dass die eine oder mehrere Proben mit darin nachzuwiesenden zweiten Nukleinsäuren und gegebenenfalls weiterer Nachweisreagenzien sequenziell oder nach Mischung mit besagten Nachweisreagenzien mit den gebundenen ersten Nukleinsäuren als Erkennungselemente in Kontakt gebracht werden und dass das Anregungswellenlicht von einer oder mehrerer Lichtquellen in den optischen Wellenleiter eingekoppelt wird mit Hilfe eines oder mehrerer optischer Kopplungselemente aus der Gruppe, die von Prismenkopplern, evaneszenten Feldern, Stirnflächenkopplern mit vor einer Stirnseite der wellenleitenden Schicht angeordneten fokussierten Linsen und Gitterkopplern gebildet wird.

Bevorzugt wird, dass die im Wellenleiter laufende Lichtwelle Lumineszenz von lumineszenzfähigen Molekülen erzeugt und dass diese Lumineszenz von einem oder mehrerer Detektoren erfasst wird. Aus der Intensität des Lumineszenzsignals kann die Konzentration einer oder mehrerer nachzuweisenden Nukleinsäuren ermittelt werden.

Das Lumineszenzlabel kann an die nachzuweisende zweite Nukleinsäure selbst gekoppelt sein, oder in einem kompetetiven Ansatz an Molekülen mit bekannter Konzentration und Sequenz, als Kompetitor, gebunden ist und so der Probe beigefügt werden. Das Luminszenzlabel kann aber auch durch einen dritten Bindungspartner in das Analysengemisch eingebracht werden.

Es wird bevorzugt, dass zur Erzeugung der Lumineszenz Lumineszenz-Farbstoffe oder lumineszente Nanopartikel als Lumineszenzlabel verwendet werden, die bei einer Wellenlänge zwischen 300nm und 1100 nm angeregt werden und emittieren.

Das erfindungsgemäße Verfahren ist dadurch gekennzeichnet, dass die zu untersuchenden Proben wässrige Lösungen, insbesondere Pufferlösungen oder natürlich vorkommende Körperflüssigkeiten wie Blut, Serum, Plasma, Urin oder Gewebeflüssigkeiten sind. Die zu untersuchenden Proben können auch aus biologischen Gewebeteilen oder Zellen präpariert werden.

Ein weiterer Gegenstand der Erfindung ist die Verwendung der erfindungsgemäßen Immobilisierungsoberflächen und/oder Verfahren in der qualitativen und quantitativen DNA- und RNA Analytik, beispielsweise die Bestimmung von genomischen Unterschieden wie den Einzelziukleotid -Polymorphismen (SNPs) oder DNA Amplifikationen oder DNA Deletionen oder DNA-Methylierung oder für die Detektion und Quantifizierung von mRNA (Expression Profiling).

In den folgenden Beispielen sind Wellenleiter mit polymeren Monoschichten (Polyvinylaminhydrochlorid) sowie mit dreischichtigem Aufbau (Polyvinylaminhydrochlorid/Dextransulfat/ Polyvinylaminhydrochlorid) als Immobilisierngsoberflächen beschrieben und deren Anwendung bei der Nukleinsäure-Analytik.

### Beispiele

### Beispiel 1

Modifizieren eines planaren Wellenleiters mit einer Monoschicht aus Polyvinylaminhydrochlorid, anschließende Dotierung mit capture DNA spots sowie Blockierung mit Dextransulfat

Ein planarer Wellenleiter (Unaxis Balzers, Liechtenstein) in den Dimensionen 2x1 cm, bestehend aus AF 45 Glas mit einer wellenleitenden, optisch transparenten, hochbrechenden Ta₂O₅ Schicht (Brechungsindex von 2.10 bei 633 nm, Schichtdicke 185 nm) und parallel zur Breite verlaufenden Gitterlinien (318 nm Periode mit 32+/- 3 nm Gittertiefe) wurde
- 30 Min. in eine 0.005 %ige Lösung von Lupamin 9095 (Fa. BASF) in Wasser getaucht.
- Der mit Lupamin modifizierte Wellenleiter wurde 30 Min. in reinem Wasser gewaschen
- Überschüssige Wasserreste wurden mit einem trockenen N₂ Strom getrocknet
- Mit Hilfe einer Mikropipette wurden 5 µl einer Fluoreszenz markierten DNA Sequenz (Cy5 - 50 mer: 5'- Cy5-CAA CAG TGC AAC CTT GGA AGC AGA TGT AGA TGT TGT TGT GTC ACC TCC AT 3', Fa. BioTeZ Berlin) auf die hochbrechende, Lupamin beschichtete Oberfläche pipettiert. Auf dieselbe Weise wurden an zwei anderen Stellen analoge capture Oligo spots aufgetragen.
- Nach einer Inkubationszeit von 30 Min. bei RT wurde der bespottete Wellenleiter 30 Min. in eine wässerige Dextransulfat Lösung (MW: 500 000 g/mol, Fa. Fluka) eingetaucht und kurz mit Wasser abgewaschen.

Der Funktionstest erfolgte durch Einkoppeln eines Laserlichtstrahls der Wellenlänge 635 nm. Dabei konnten an den Stellen, an denen die capture DNA spots aufpipettiert wurden, hervorgerufen durch die Emission des Cy5 Fluoreszenzfarbstoffes (Fa. Amersham), hell leuchtende Punkte beobachtet werden.

Zum Vergleich wurde die oben erwähnte Cy5 50 mer Capture Lösung auf eine Stelle, die mit Dextransulfat gegen DNA Adsorption geblockt war, aufpipettiert und mit Wasser gewaschen. Beim anschließenden optischen Funktionstest wurde an den entsprechenden Stellen kein Farbsignal gefunden.

### Beispiel 2

Modifizieren eines planaren Wellenleiters mit einer Polyelektrolyt Tripleschicht aus Polyvinylaminhydrochlorid/Dextransulfat/ Polyvinylaminhydrochlorid, anschließende Dotierung mit capture DNA spots sowie Blockierung mit Dextransulfat

Ein planarer Wellenleiter (Unaxis, Balzers, Liechtenstein) in den Dimensionen 2x1 cm, bestehend aus AF 45 Glas mit einer wellenleitenden, optisch transparenten, hochbrechenden Ta₂O₅ Schicht (Brechungsindex von 2.15 bei 633 nm, Schichtdicke 185 nm) und parallel zur Breite verlaufenden Gitterlinien (318 nm Periode mit 32 +/- 3 nm Gittertiefe) wurde
1. 30 Min. in eine 0.005 %ige Lösung von Lupamin 9095 (Fa. BASF) in Wasser getaucht.
2. Der mit Lupamin modifizierte Wellenleiter wurde 30 Min. in reinem Wasser gewaschen.
3. Der Wellenleiter mit der Lupamin Monoschicht wurde 30 Min. in eine 0.05%ige wässerige Dextransulfat Lösung getaucht.
4. Anschließend wurde 30 Min. in reinem Wasser gewaschen.
5. Wiederholung von Schritt 1.
6. Der Wellenleiter mit der Polyelektrolyt Triple Schicht wurde 30 Min. in Wasser gewaschen.
7. Überschüssige Wasserreste wurden mit einem trockenen N₂ Strom getrocknet.
8. Mit Hilfe einer Mikropipette wurden 5 µl einer Fluoreszenz markierten DNA Sequenz (Cy5 - 50 mer: 5'- Cy5-CAA CAG TGC AAC CTT GGA AGC AGA TGT AGA TGT TGT TGT GTC ACC TCC AT 3' , Fa. BioTeZ Berlin) auf die hochbrechende, Lupamin beschichtete Oberfläche pipettiert. Auf dieselbe Weise wurden an zwei anderen Stellen analoge capture Oligo spots aufgetragen.
9. Nach einer Inkubationszeit von 30 Min. bei RT wurde der bespottete Wellenleiter 30 Min. in eine wässerige Dextransulfat Lösung (MW: 500 000 g/mol, Fa. Fluka) eingetaucht und kurz mit Wasser abgewaschen.

Der Funktionstest erfolgte durch Einkoppeln eines Laserlichtstrahls der Wellenlänge 635 nm. Dabei konnten an den Stellen, an denen die capture DNA spots aufpipettiert wurden, hervorgerufen durch die Emission des Cy5 Fluoreszenzfarbstoffes (Fa. Amersham), hell leuchtende Punkte beobachtet werden.

Zum Vergleich wurde die oben erwähnte Cy5 50 mer Capture Lösung auf eine Stelle, die mit Dextransulfat gegen DNA Adsorption geblockt war, aufpipettiert und mit Wasser gewaschen. Beim anschließenden optischen Funktionstest wurde an den entsprechenden Stellen kein Farbsignal gefunden.

### Beispiel 3

### Hybridisierung bakterieller cDNA auf Lupamin beschichteten planaren Wellenleiter-Chips

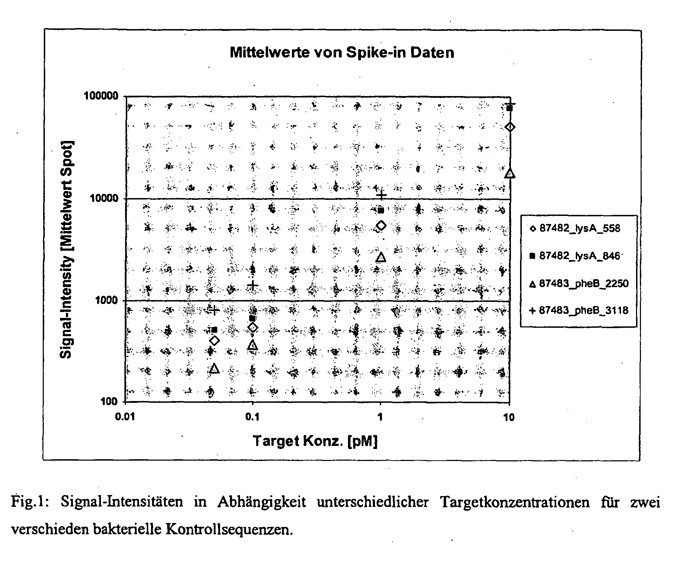

Ein planarer Wellenleiterchip (SensiChip, Zeptosens, Bayer Schweiz AG, Witterswil, Schweiz) von 14mm x 57mm bestehend aus AF 45 Glas mit einer wellenleitenden, optisch transparenten, hochbrechenden Ta₂O₅ Schicht (Brechungsindex von 2.12 bei 535 nm, Schichtdicke 145 nm) und parallel zur Breite verlaufenden Gitterlinien (318 nm Periode mit 13 +/- 2 nm Gittertiefe) wurde
- 60 Min. in eine 0.01 %ige Lösung von Lupamin 9095 (Fa. BASF) in Wasser getaucht
- anschließend wurden die Chips 30min in Millipore Wasser gewaschen und weitere 4 Stunden in einem frisch Millipore Wasser gestellt.
- Überschüssige Wasserreste wurden mit einem trockenen N₂ Strom entfernt.
- Die Chips wurden in einen Kontakt-Spotter positioniert und mit unterschiedlichen Oligonucleotide Lösungen in einer Konzentration von 10⁻⁵ M bespottet. Die Oligonucleotide wurde von der Firma Operon (Köln, Deutschland) synthetisiert und hatten eine Länge von 70 Basen. Vier der Oligonucleotide hatten eine Sequenz die komplementär zu den bei der späteren Hybidisierung verwendeten bakteriellen Kontroll-cDNA hatten (B.subtilis Sequenzen, ATCC 87482 bzw. 87483; Referenz Sequenzen X17013 bzw. M24537, The American Type Culture Collection, www.atcc.org)
- Nach einer Inkubationszeit von 60 Min. bei RT wurde der bespottete Wellenleiter 5 Min. in eine wässerige Blockingslösung (5%Dextransulfat (MW: 500 000 g/mol, 1% Tween, 10mM Tris, 30% Formamid, ph 8,5) eingetaucht und anschließend 1 min mit Wasser abgewaschen.
- Überschüssige Wasserreste wurden mit einem trockenen N₂ Strom entfernt.
- Die bespotteten und blockierten Chips wurden in die Hybridisierungkammern des SensiChip Systems der Firma Zeptosens (Bayer Schweiz AG, Witterswil, Schweiz) nach Angaben des Systemvertreibers eingelegt. Die Chips wurden nach Systemanweisung zunächst in SB Puffer und dann in PHB Puffer inkubiert. Das die Cy5- markierte cDNA beinhaltende Hybridisierungsgemisch wurde ebenfalls nach Vorgaben des SensiChip Systems angesetzt. Die cDNA war zuvor in einer MarlQerungsreaktion mit Hilfe des LabelStar-Kits der Firma Qiagen Hilden, Germany) mit dem Fluoreszenzfarbstoff Cy5 (Amersham, Arlington Heights, USA) aus der bakteriellen mRNA synthetisiert worden. Das Hybridisierungsgemisch wurde unmittelbar vor Einfüllen in die Hybridisierungskammern für 5 min bei 95° erhitzt. Die cDNA wurde in Konzentrationen von 5x10⁻¹⁴ M - bis 10⁻¹² M bezogen auf die Ausgangs-RNA Menge eingesetzt. Da Hybridisierungsvolumen betrug 40µl. Nach einer über Nacht Inkubation bei 42°C wurde die Chips nach Angaben des Systemvertreibers mit den Systemwaschpuffern gewaschen. Die Auslesung der Chips erfolgte im Zepto-Reader (PWG-Systern, CCD Kamera basiert) mit unterschiedlichen Belichtungszeiten. Die ermittelten Intensitäten in Abhängigkeit von den unterschiedlichen Proben-Konzentrationen sind in Fig. 1 dargestellt.

### Literatur

¹ Beste, G.; Schmidt, F. S.; Stibora, T.; Skerra A.; Proc. Natl. Acad Sci. USA (1999) 96, 1898-1903.
² Tiefenthaler et al.; US 4 815 843 (1989).
³ Kunz, R.; US 5 442 169 (1995).
4 Duveneck, G. L.; Neuschäfer, D.; Ehrat, M.; US 5 959 292 (1999).
⁵ Duveneck, D. L.; Heming, M.; Neuschäfer, D.; Segner, J.; EP 0 759 159 (1995).
⁶ Neuschäfer, D.; Duveneck, G. L.; Pawlak, M.; Pieles, U.; Budach, W.; WO 96/35940 (1996).
⁷ Clerc, D. and Lukosz, W.; Sensors and Actuators B (1997) 40, 53-58.
⁸ Barner, R.; Fattinger, C.; Huber, W., Hübscher, J.; Schlatter, D.; Europäische Patentanmeldung EP 0 596 421.
⁹ Budach, W.; Abel, A: P.; Bruno, A. E.; Neuschäfer, D.; Anal. Chem. (1999) 71, 3347-3355.
¹⁰ Piehler, J.; Brecht, A.; Geckeler, K. E.; Gauglitz, G.; Biosensors & Biolelectronics (1996) 11, 579-590.
¹¹ Schneider, B. H.; Dickinson, E. L.; Vach, M. D.; Hoijer, J. V.; Howard, L. V.; Biosensors & Bioelectronics (2000) 15, 13-22.
¹² Piehler, J.; Brecht, A.; Geckeler, K. E.; Gauglitz, G.; Biosensors & Biolelectronics (1996) 11, 579-590.
¹³ Porath, J. Protein Expr. Purif. (1992) 3, 263-281.
¹⁴ Buckland, R. M.; Nature (1986) 320, 557.

## Patentansprüche

1. Verwendung von Polyelektrolyt Mono- und Multischichten zur Beschichtung eines optischen Signalwandlers **dadurch gekennzeichnet, dass** die Polyelektrolyt Polymere ein Molekulargewicht von mindestens 100.000 g/mol haben und die Polyelektrolyt Polymere kationische Polymere sind.

2. Verwendung nach Anspruch 1, **dadurch gekennzeichnet, dass** die Polyelektrolyt Polymere ein Molekulargewicht von mindestens 250.000 g/mol haben.

3. Verwendung nach Anspruch 1, **dadurch gekennzeichnet, dass** die Polyelektrolyt Polymere ein Molekulargewicht von mindestens 500.000 g/mol haben.

4. Verwendung nach einem der Ansprüche Ansprüchen 1 bis 3 **dadurch gekennzeichnet, dass** die Polyelektrolyt Polymere ausgewählt sind aus der Gruppe: Polyvinylamin, Polyethylenimin und Poly-(diallyl-dimethylammoniumchlorid).

5. Optischer Signalwandler, aufweisend eine Beschichtung mit Polyelektrolyt Mono- und Multischichten für optische Signalwandler **dadurch gekennzeichnet, dass** die Polyelektrolyt Polymere ein Molekulargewicht von mindestens 100.000 g/mol haben und die Polyelektrolyt Polymere kationische Polymere sind.

6. Optischer Signalwandler nach Anspruch 5, **dadurch gekennzeichnet, dass** die Polyelektrolyt Polymere ein Molekulargewicht von mindestens 250.000 g/mol haben.

7. Optischer Signalwandler nach Anspruch 5, **dadurch gekennzeichnet, dass** die Polyelektrolyt Polymere ein Molekulargewicht von mindestens 500.000 g/mol haben.

8. Optischer Signalwandler nach einem der Ansprüche 5 bis 7 **dadurch gekennzeichnet, dass** die Polyelektrolyt Polymere ausgewählt sind aus der Gruppe: Polyvinylamin, Polyethylenimin und Poly-(diallyl-dimethylammoniumchlorid).

## Claims

1. Use of polyelectrolyte mono- and multilayers for coating an optical signal transducer, **characterized in that** the polyelectrolyte polymers have a molecular weight of at least 100 000 g/mol and the polyelectrolyte polymers are cationic polymers.

2. Use according to Claim 1, **characterized in that** the polyelectrolyte polymers have a molecular weight of at least 250 000 g/mol.

3. Use according to Claim 1, **characterized in that** the polyelectrolyte polymers have a molecular weight of at least 500 000 g/mol.

4. Use according to one of Claims 1 to 3, **characterized in that** the polyelectrolyte polymers are selected from the group of: polyvinylamine, polyethyleneimine and poly(diallyldimethylammonium chloride).

5. Optical signal transducer, having a coating with polyelectrolyte mono- and multilayers for optical signal transducers, **characterized in that** the polyelectrolyte polymers have a molecular weight of at least 100 000 g/mol and the polyelectrolyte polymers are cationic polymers.

6. Optical signal transducer according to Claim 5, **characterized in that** the polyelectrolyte polymers have a molecular weight of at least 250 000 g/mol.

7. Optical signal transducer according to Claim 5, **characterized in that** the polyelectrolyte polymers have a molecular weight of at least 500 000 g/mol.

8. Optical signal transducer according to one of Claims 5 to 7, **characterized in that** the polyelectrolyte polymers are selected from the group of: polyvinylamine, polyethyleneimine and poly(diallyldimethylammonium chloride).

## Revendications

1. Utilisation de monocouches et de multicouches de polyélectrolyte d'un transducteur de signaux optique, **caractérisée en ce que** les polymères de polyélectrolyte ont un poids moléculaire de au moins 100.000 g/mole et les polymères de polyélectrolyte sont des polymères cationiques.

2. Utilisation suivant la revendication 1, **caractérisée en ce que** les polymères de polyélectrolyte ont un poids moléculaire d'au moins 250.000 g/mole.

3. Utilisation suivant la revendication 1, **caractérisée en ce que** les polymères de polyélectrolyte ont un poids moléculaire d'au moins 500.000 g/mole.

4. Utilisation suivant l'une des revendications 1 à 3, **caractérisée en ce que** les polymères de polyélectrolyte sont choisies dans le groupe : polyvinylamine, polyéthylènimine, et poly( chlorure de diallyl-diméthylammonium ).

5. Convertisseur de signaux optique, comportant un revêtement par des monocouche et multicouches de polyélectrolyte pour des convertisseurs de signaux optique, **caractérisé en ce que** les polymères de polyélectrolyte ont un poids moléculaire d'au moins 100.000 g/mole et les polymères de polyélectrolyte sont des polymères cationiques.

6. Convertisseur de signaux optique suivant la revendication 5, **caractérisé en ce que** les polymères de polyélectrolyte ont un poids moléculaire d'au moins 250.000 g/mole.

7. Convertisseur de signaux optique suivant la revendication 5, **caractérisé en ce que** les polymères de polyélectrolyte ont un poids moléculaire d'au moins 500.000 g/mole.

8. Convertisseur de signaux optique suivant l'une des revendications 5 à 7, **caractérisé en ce que** les polymères de polyélectrolyte sont choisies dans le groupe polyvinylamine, polyéthylènimine, et poly(chlorure de diallyl-diméthylammonium).
